# EUROPÄISCHE PATENTSCHRIFT

(11) **EP 3 071 498 B1**
(45) Veröffentlichungstag und Bekanntmachung des Hinweises auf die Patenterteilung: **08.04.2020**
(21) Anmeldenummer: 14796106.4
(22) Anmeldetag: 10.11.2014
(51) Int. Cl.: B65G 19/02, B65G 47/68, B65G 47/71, B65G 54/02

(54) **PRODUKTSTROMÜBERFÜHRUNGSVORRICHTUNG**
PRODUCT-STREAM-TRANSFER APPARATUS
DISPOSITIF DE TRANSFORMATION DE FLUX DE PRODUITS

(30) Priorität: 18.11.2013 DE 102013223494
(43) Veröffentlichungstag der Anmeldung: 28.09.2016
(73) Patentinhaber: Robert Bosch GmbH, 70442 Stuttgart (DE)
(72) Erfinder: ERNST, Frank, CH-8447 Dachsen (CH); LANDOLT, Markus, CH-8215 Hallau (CH); REICHARDT, Christian, CH-8245 Feuerthalen (CH); WIPF, Alfred, 79798 Jestetten (DE)
(74) Vertreter: Daub, Thomas
(86) Internationale Anmeldenummer: PCT/EP2014/074203
(87) Internationale Veröffentlichungsnummer: WO 2015/071228

(56) Entgegenhaltungen:
- EP-A1- 1 533 257
- EP-A1- 2 500 296
- DE-A1- 2 510 395
- DE-A1-102009 029 314
- DE-A1-102012 201 059
- JP-A- S4 919 574
- NL-A- 8 401 073
- US-A- 6 125 990
- US-A1- 2008 099 307

## Beschreibung

### Stand der Technik

Durch US 6,125,990 A ist bereits eine Produktstromüberführungsvorrichtung zum Überführen zumindest eines ersten Teilproduktstroms und eines weiteren Teilproduktstroms in einen Hauptproduktstrom oder zum Trennen eines Hauptproduktstroms in zumindest einen ersten Teilproduktstrom und einen weiteren Teilproduktstrom entlang einer Produktstromüberführungsstrecke, mit einer ersten Seitenstrecke mit einer Vielzahl von Transportelementen zum Transport von Produkten des ersten Teilproduktstroms, mit zumindest einer weiteren Seitenstrecke mit einer Vielzahl von Transportelementen zum Transport von Produkten des weiteren Teilproduktstroms, mit einer an die Produktstromüberführungsstrecke angrenzenden Hauptstrecke zum Transport der Produkte des Hauptproduktstroms und mit zumindest einem Produktstromsteuermittel, das dazu vorgesehen ist, Produkte zumindest eines der Teilproduktströme in Überführungsbewegungen quer zu einer Transportrichtung des Hauptproduktstroms entlang der Produktstromüberführungsstrecke in den Hauptproduktstrom einzufügen oder zumindest eine Teilmenge der Produkte des Hauptproduktstroms in Überführungsbewegungen quer zur Transportrichtung des Hauptproduktstroms entlang der Produktstromüberführungsstrecke auf die Teilproduktströme zu verteilen, vorgeschlagen worden. US 6,125,990 A offenbart somit eine Produktstromüberführungsvorrichtung zum Überführen oder Trennen von Produktströmen gemäß dem Oberbegriff des Anspruchs 1.

Ferner ist aus DE 10 2009 029 314 A1 bereits eine Anwendung einer Linearmotor-Antriebsmotorvorrichtung zu einem unabhängigen Antrieb von einzelnen Transportelementen bekannt.

Aus EP 2 500 296 A1 ist bereits ein Transportsystem bekannt, mit welchem eine Gruppierung von Artikeln durch eine Verwendung von Einteilfingern durchgeführt wird, wobei die Einteilfinger unabhängig voneinander durch Permanentmagnetläufer oder ähnliche Magnetantriebe mit variablen oder unterschiedlichen Vorschubgeschwindigkeiten antreibbar sind.

Des Weiteren ist aus US 2008/0099307 A1 bereits ein Transportsystem bekannt, das beweglich gelagerte Einteilfinger zu einem Gruppieren von einzelnen Produkten aufweist. DE 10 2012 201 059 A1 offenbart eine Vorrichtung und ein entsprechendes Verfahren zum Ausleiten von Produkten, insbesondere Füllgutbehältern wie Flaschen, aus einer Transportstrecke mit Hilfe von einem oder mehreren Ausleitsegmenten, wobei das oder jedes Ausleitsegment einen Schlitten und einen Ausleiter umfasst und der Ausleiter durch eine Auslenkung die Ausleitung des Produkts bewirken kann, wobei das oder jedes Ausleitsegment einen zweiten Schlitten umfasst wobei jeder der zwei Schlitten an einer Führung montiert ist und der Ausleiter und die Schlitten mechanisch miteinander verbunden sind, sodass der relative Abstand der Schlitten zueinander die Auslenkung des Ausleiters bestimmt.

### Offenbarung der Erfindung

Die Erfindung geht aus von einer Produktstromüberführungsvorrichtung zum Überführen zumindest eines ersten Teilproduktstroms und eines weiteren Teilproduktstroms in einen Hauptproduktstrom oder zum Trennen eines Hauptproduktstroms in zumindest einen ersten Teilproduktstrom und einen weiteren Teilproduktstrom entlang einer Produktstromüberführungsstrecke, mit einer ersten Seitenstrecke mit einer Vielzahl von Transportelementen zum Transport von Produkten des ersten Teilproduktstroms, mit zumindest einer weiteren Seitenstrecke mit einer Vielzahl von Transportelementen zum Transport von Produkten des weiteren Teilproduktstroms, und mit einer an die Produktstromüberführungsstrecke angrenzenden Hauptstrecke zum Transport der Produkte des Hauptproduktstroms und mit zumindest einem Produktstromsteuermittel, das dazu vorgesehen ist, Produkte zumindest eines der Teilproduktströme in Überführungsbewegungen quer zu einer Transportrichtung des Hauptproduktstroms entlang der Produktstromüberführungsstrecke in den Hauptproduktstrom einzufügen oder zumindest eine Teilmenge der Produkte des Hauptproduktstroms in Überführungsbewegungen quer zur Transportrichtung des Hauptproduktstroms entlang der Produktstromüberführungsstrecke auf die Teilproduktströme zu verteilen.

Es wird vorgeschlagen, dass die Transportelemente zumindest einer Seitenstrecke in Richtung der Überführungsbewegung quer zur Transportrichtung des Hauptproduktstroms, entlang der Produktstromüberführungsstrecke, bewegbar gelagerte Mitnehmer zum Transport der Produkte aufweisen, wobei zumindest Teilmengen der Transportelemente zumindest entlang einer der Seitenstrecken der Produktstromüberführungsstrecke voneinander unabhängig antreibbar sind. Unter einem "Produktstrom" soll in diesem Zusammenhang insbesondere eine Abfolge von entlang einer Bahn transportierten Produkten verstanden werden. Die Produkte können insbesondere in einem sich entlang der Bahn erstreckenden kontinuierlichen Stapel, einzeln und/oder in Produktgruppen entlang der Bahn transportiert werden. Die Bahn kann bevorzugt zumindest abschnittsweise eine Gerade sein. Es sind aber auch von einer Gerade abweichende Bahnformen möglich, wie Kurven und/oder insbesondere Kreisbahnen und/oder Kreisbahnausschnitte. Unter einer "Strecke" soll in diesem Zusammenhang insbesondere ein Abschnitt einer Bahn verstanden werden. Unter einer "Produktstromüberführungsstrecke" soll in diesem Zusammenhang insbesondere ein Streckenabschnitt verstanden werden, entlang dessen sich die Bahn zumindest eines Teilproduktstroms der Bahn des Hauptproduktstroms annähert, um Produkte von den Seitenstrecken auf die Hauptstrecke zusammenzuführen, oder entlang dessen sich die Bahn der Teilproduktströme von der Bahn des Hauptproduktstroms entfernt, um Produkte von der Hauptstrecke auf die Seitenstrecken zu verteilen. Unter einem Abstand zweier Bahnen soll in diesem Zusammenhang ein Abstand senkrecht zur gemittelten Transportrichtung der Bahnen verstanden werden. Durch ein Überführen oder Trennen der Produkte entlang einer Produktstromüberführungsstrecke kann ein kontinuierliches Überführen oder Trennen von Produktströmen während einer Transportbewegung erreicht werden. Stillstände, wie sie notwendig sein können wenn Produkte senkrecht oder annähernd senkrecht zu einer Transportrichtung in einen Produktstrom eingebracht oder aus einem Produktstrom ausgebracht werden, können vermieden werden. Unter einem "Transportelement" soll in diesem Zusammenhang insbesondere ein Element verstanden werden, das dazu vorgesehen ist, ein Produkt und/oder eine Produktgruppe entlang einer Strecke zu transportieren. Die Produkte und/oder die Produktgruppen können auf den Transportelementen aufliegen und/oder in die Transportelemente eingelegt sein und von diesen getragen werden. Die Transportelemente können Sauger aufweisen und die Produkte und/oder Produktgruppen mittels Vakuumbeaufschlagung erfassen und transportieren. Bevorzugt können Sauger entgegen einer Gewichtskraft oberhalb der Produkte und/oder Produktgruppen angeordnet sein und diese zum Transport anheben. Die Transportelemente können die auf einer Produktführung aufliegenden Produkte und/oder Produktgruppen mittels eines an eine Form der Produkte angepassten Produktschuhs von einer der Produktauflage gegenüberliegenden Seite her ganz oder teilweise umgreifen. Die Transportelemente können Mitnehmer aufweisen, die durch eine Ausnehmung der Produktauflage in den Produktstrom ragen, um die Produkte und/oder Produktgruppen in Transportrichtung zu schieben. Bevorzugt können die Produkte und/oder Produktgruppen auf der Produktführung, insbesondere einem Zufuhrträger, aufliegen und durch die Transportelemente über die Produktführung gezogen oder insbesondere geschoben werden. Transportelemente und Produkte können sich entlang einer gemeinsamen oder abweichender Bahnen bewegen, wobei die Transportelemente zumindest eine Bewegungskomponente an die Produkte übertragen. Die Produktstromüberführungsvorrichtung kann unterschiedlich ausgebildete Transportelemente aufweisen. Insbesondere können unterschiedliche Seitenstrecken abweichend ausgebildete Transportelemente aufweisen. Zum Beispiel können Transportelemente einer ersten Seitenstrecke zum Transport der Produkte und/oder Produktgruppen Mitnehmer aufweisen, die entgegen der Richtung der Gewichtskraft von unten in den Produktstrom ragen, und Transportelemente einer weiteren Seitenstrecke können die Produkte und/oder Produktgruppen von der der Produktauflage gegenüberliegenden Seite her mit Saugern tragen. Dies kann insbesondere vorteilhaft sein, wenn Produkte der einen Seitenstrecke auf die Produkte der weiteren Seitenstrecke in der Produktüberführungsstrecke abgelegt werden sollen. In der Folge soll unter einem "Produkt" allgemein ein von einem Transportelement transportiertes Produkt und/oder eine von einem Transportelement transportierte Produktgruppe verstanden werden. Unter "unabhängig antreibbar" soll in diesem Zusammenhang insbesondere verstanden werden, dass die Transportelemente in Transportrichtung unabhängig antreibbar sind. Insbesondere können die Transportelemente mit voneinander abweichenden, variablen Geschwindigkeiten angetrieben werden, so dass Abstände zwischen den Transportelementen und damit zwischen von den Transportelementen transportierten Produkten während des Transports vergrößert und/oder verkleinert werden können. Unter einer "Teilmenge" von Transportelementen soll in diesem Zusammenhang insbesondere verstanden werden, dass die Transportelemente in Gruppen zusammengefasst sein können. Insbesondere können die Transportelemente zwei, bevorzugt drei Teilmengen bilden. Die Transportelemente einer Teilmenge können gemeinsam angetrieben werden. Transportelemente unterschiedlicher Teilmengen können unabhängig antreibbar sein. Bevorzugt können die Transportelemente in Transportrichtung abwechselnd den verschiedenen Teilmengen angehören. Bei drei Teilmengen kann zum Beispiel in Transportrichtung ein Transportelement der ersten, das nächste Transportelement der zweiten, das nächste Transportelement der dritten und das nächste Transportelement wiederum der ersten Teilmenge usw. angehören. Aufeinanderfolgende Transportelemente können unabhängig antreibbar sein. Eine Anzahl benötigter Antriebe kann reduziert werden. Die Transportelemente können von umlaufenden Elementen, wie insbesondere Transportriemen, angetrieben werden. Jedes umlaufende Element kann ein Transportelement oder bevorzugt eine Teilmenge von Transportelementen antreiben. Es kann ebenfalls möglich sein, dass die Transportelemente jeweils eigene, mit den Transportelementen mitbewegte Antriebe aufweisen oder Teile eines Antriebs sind. Es ist möglich, dass zumindest Teilmengen der Transportelemente entlang einer ersten Seitenstrecke der Produktstromüberführungsstrecke voneinander unabhängig antreibbar sind. Die Transportelemente können entlang weiterer Seitenstrecken und/oder entlang der Hauptstrecke gemeinsam in einer gemeinsamen Geschwindigkeit angetrieben werden. Unabhängig antreibbare Transportelemente und gemeinsam angetriebene Transportelemente können verschieden ausgeführt sein. Eine Anzahl entlang der Seitenstrecken zugeführter Produkte kann variabel sein. Bevorzugt können, wenn die Teilproduktströme der Seitenstrecken in einen Hauptproduktstrom überführt werden sollen, die Produkte der ersten Seitenstrecke so zugeführt werden, dass Lücken zwischen Produkten der weiteren Seitenstrecke ausgefüllt werden. Die Teilproduktströme können in einer kontinuierlichen Transportbewegung in den Hauptproduktstrom überführt oder der Hauptproduktstrom kann in einer kontinuierlichen Transportbewegung in die Teilproduktströme getrennt werden. Bevorzugt sind zumindest Teilmengen der Transportelemente entlang mehrerer, besonders bevorzugt entlang aller Seitenstrecken der Produktüberführungsstrecke voneinander unabhängig antreibbar, besonders bevorzugt sind alle Transportelemente entlang aller Seitenstrecken der Produktüberführungsstrecke jeweils voneinander unabhängig antreibbar. Die Teilproduktströme der Seitenstrecken können in einem frei bestimmbaren Verhältnis zum Hauptproduktstrom zusammengeführt werden oder der Hauptproduktstrom kann in einem frei bestimmbaren Verhältnis auf die Teilproduktströme aufgeteilt werden. Bevorzugt werden Produkte eines Teilproduktstroms in Lücken von Produkten eines weiteren Teilproduktstroms überführt, um den Hauptproduktstrom zu bilden. Alternativ kann es möglich sein, dass Produkte eines Teilproduktstroms auf, neben, vor oder hinter Produkten eines weiteren Teilproduktstroms abgelegt werden. Es kann ein Hauptproduktstrom gebildet werden, der Stapel und/oder Reihen von Produkten der Teilproduktströme enthält.

Vorteilhaft wird zumindest ein Linearmotorsystem vorgeschlagen, das zumindest entlang einer Seitenstrecke der Produktstromüberführungsstrecke einen Stator und eine Vielzahl unabhängig antreibbarer Translatoren aufweist, die dazu vorgesehen sind, die Transportelemente unabhängig voneinander anzutreiben. Unter einem "Linearmotorsystem" soll in diesem Zusammenhang ein System verstanden werden, welches zumindest einen Stator und eine Vielzahl entlang des Stators antreibbarer beweglicher Translatoren aufweist. Der Stator kann sich entlang einer Geraden, aber auch entlang einer Kurve und/oder einer Kreisbahn erstrecken. Höhenunterschiede und/oder Abstände der Bahnen der Seitenstrecken können ausgeglichen werden. Bevorzugt folgt der Stator der Bahn der Seitenstrecke. Der Stator kann als Sekundärteil, bevorzugt als Primärteil, des Linearmotors ausgebildet sein. Bevorzugt weist der Stator zumindest abschnittsweise unabhängig ansteuerbare Statorwicklungen auf. Ein magnetisches Wanderfeld kann für jeden im Einflussbereich des Stators befindlichen Translator unabhängig erzeugt werden. Die Translatoren können unabhängig angetrieben werden. Die Translatoren können als Primärteile, bevorzugt als Sekundärteile, des Linearmotorsystems ausgebildet sein. Bevorzugt weisen die Translatoren Permanentmagnete auf. Die Translatoren können passiv ausgebildet sein. Bewegte Leitungen zur Stromführung zu den Translatoren können entfallen. Bevorzugt weist das Linearmotorsystem Weg- und/oder Positionsmessmittel auf, die dazu vorgesehen sind, die Positionen und/oder Geschwindigkeiten der Translatoren relativ zum Stator zu messen. Bevorzugt ist eine Steuereinheit dazu vorgesehen, Position und/oder Geschwindigkeit der Translatoren zu steuern und/oder zu regeln. Solche Linearmotorsysteme mit unabhängig antreibbaren Translatoren sind dem Fachmann bekannt. Bevorzugt ist jeweils ein Translator zum Antrieb eines Transportelements vorgesehen. Eine Vielzahl von Translatoren kann entlang des Stators unabhängig antreibbar sein. Mechanische und/oder elektrische bewegte Mittel, wie insbesondere Kabel und/oder Antriebsriemen oder Antriebsketten, zum Antrieb der Translatoren können entfallen. Entlang einer Strecke können mehrere Statoren, bevorzugt senkrecht zur Transportrichtung nebeneinander, angeordnet sein. Die Statoren können jeweils dazu vorgesehen sein, eine Teilmenge der Translatoren der Strecke anzutreiben. Bevorzugt können die Translatoren entlang der Transportrichtung abwechselnd einem der Statoren zugeordnet sein. Ein einzuhaltender Mindestabstand der Translatoren in Transportrichtung kann reduziert sein. Insbesondere können die Translatoren senkrecht zur Transportrichtung nebeneinander angeordnet sein, so dass sich die Translatoren in Transportrichtung überlappen können. In einer alternativen Ausgestaltung können mehrere Translatoren, insbesondere zwei, zum Antrieb eines Transportelements vorgesehen sein. Insbesondere kann das Transportelement mehrteilig ausgebildet sein und die an einem Transportelement angeordneten Translatoren können unterschiedliche Teile des Transportelements antreiben. Die Translatoren können eine Relativbewegung von Teilen des Transportelements zueinander antreiben. Insbesondere kann die Relativbewegung dazu genutzt werden, weitere, von der Transportrichtung abweichende Bewegungen des Transportelements anzutreiben. Die Translatoren können unabhängig von den Transportelementen an Führungsmitteln gelagert sein. Eine Bahn, entlang deren die Translatoren bewegt werden, kann von der Bahn, entlang deren die Transportelemente bewegt werden, abweichen. Bewegungsübertragungsmittel können dazu vorgesehen sein, zumindest eine Bewegungskomponente der Translatoren auf die Transportelemente zu übertragen. Bevorzugt können die Translatoren an den Transportelementen gelagert sein. Führungsmittel zur Lagerung der Translatoren können entfallen. Bevorzugt können von Permanentmagneten gebildete Translatoren fest mit den Transportelementen verbunden sein.

Bevorzugt werden die Transportelemente nach einer Teilstrecke der Hauptstrecke in einem Umlauf wieder auf die Seitenstrecken verteilt und zu diesen zurückgeführt oder nach einer Teilstrecke der Seitenstrecken in einem Umlauf wieder zur Hauptstrecke zurückgeführt. Die Transportelemente können gemeinsam mit den Produkten von den Teilproduktströmen zum Hauptproduktstrom zusammengeführt werden oder vom Hauptproduktstrom auf die Teilproduktströme verteilt werden. Es kann möglich sein, dass die Transportelemente die Produkte tragen. Weitere Führungsmittel zum Führen der Produkte können entfallen. Abweichende Bewegungsbahnen der Transportelemente und der Produkte können vermieden werden. Insbesondere können bewegliche Elemente zum Ausgleich von auftretenden Relativbewegungen zwischen Produkten und Transportelementen vermieden werden.

Vorteilhaft ist an der Hauptstrecke zumindest entlang einer an die Produktstromüberführungsstrecke angrenzenden Teilstrecke ein Stator des Linearmotorsystems angeordnet, der zum Antrieb der von den Seitenstrecken auf die Hauptstrecke überführten oder der von der Hauptstrecke auf die Seitenstrecken zu verteilenden Transportelemente entlang der Teilstrecke vorgesehen ist. Der Stator kann die an den Transportelementen angeordneten Translatoren und mit diesen die Transportelemente antreiben. Die Transportelemente können entlang der Teilstrecke der Hauptstrecke, an der der Stator angeordnet ist, unabhängig antreibbar sein. Die von den Seitenstrecken kommenden oder auf die Seitenstrecken zu verteilenden Transportelemente können entlang der Teilstrecke der Hauptstrecke von einem gemeinsamen Stator angetrieben werden. Weitere Statoren können entlang dieser Teilstrecke entfallen. Es kann vermieden werden, entlang der Teilstrecke der Hauptstrecke mehrere Statoren nebeneinander anzuordnen. Störungen zwischen nebeneinander angeordneten Statoren können vermieden werden. Kosten können reduziert werden.

Die Produktstromsteuermittel können die Produkte vorteilhaft in den Hauptproduktstrom einfügen oder vom Hauptproduktstrom auf die Teilproduktströme verteilen. Die Produktstromsteuermittel können die Produkte direkt führen. Insbesondere können die Produktstromsteuermittel als Seitenführungen ausgebildet sein, die die Produkte bei einem Transport in Transportrichtung näher zusammenbringen oder auseinanderführen. Die Produktsteuermittel können auch als Führungen der Transportelemente ausgebildet sein, die die Transportelemente bei einem Transport in Transportrichtung näher zusammenbringen oder weiter auseinanderführen. Die Transportelemente können somit die Produkte bei einem Transport in Transportrichtung näher zusammenbringen oder weiter auseinanderführen. Weiter können die Transportelemente Produktstromsteuermittel aufweisen, die dazu vorgesehen sind, die Produkte bei einem Transport in Transportrichtung näher zusammenzubringen oder weiter auseinanderzuführen, um diese in den Hauptproduktstrom einzubringen oder auf Teilproduktströme zu verteilen.

Die Mitnehmer können Produktstromsteuermittel bilden oder Teil eines Produktstromsteuermittels sein. Alternativ können die Mitnehmer Relativbewegungen zwischen Produkten und Transportelementen ausgleichen. Insbesondere können die Mitnehmer und die Transportelemente entlang abweichender Bahnen geführt werden. Die Produkte können entlang der Produktstromüberführungsstrecke entlang von Bahnen geführt werden, entlang deren sie sich quer zur Transportrichtung annähern oder entfernen. Die Produkte können von Teilproduktströmen zu einem Hauptproduktstrom zusammengeführt oder von einem Hauptproduktstrom auf Teilproduktströme verteilt werden. Die Transportelemente können entlang der Produktstromüberführungsstrecke entlang einer geraden Bahn geführt werden. Eine Führung und/oder ein Antrieb der Transportelemente kann besonders einfach aufgebaut sein.

Weiter wird vorgeschlagen, dass die Transportelemente zumindest einer Seitenstrecke in den Teilproduktstrom der Seitenstrecke ein- und/oder ausbringbar gelagerte Mitnehmer zum Transport der Produkte aufweisen. Insbesondere können die Mitnehmer in den Teilproduktstrom eintauchen, dass heißt eingebracht werden, um die Produkte von einer vorgelagerten Transporteinrichtung zu übernehmen und anzutreiben. Die Mitnehmer können aus dem Teilproduktstrom ausgebracht werden, um die Produkte an eine weitere Transporteinrichtung zu übergeben. Bevorzugt können die Mitnehmer in den Teilproduktstrom ein- und/oder ausbringbar und in Richtung der Überführungsbewegung beweglich gelagert sein. Bevorzugt können die Mitnehmer in den Hauptproduktstrom ein- und/oder ausbringbar gelagert sein, wenn sich die Transportelemente entlang des Hauptproduktstroms bewegen. Eine Gruppierung der Produkte kann beim Überführen in den Hauptproduktstrom oder beim Trennen auf Teilproduktströme durch Ein- und/oder Ausbringen von Mitnehmern verändert werden. Insbesondere können Stapel und/oder Gruppen von mehreren Produkten oder Produktgruppen gebildet werden, indem Mitnehmer, die Produkte transportieren, aus dem Produktstrom ausgebracht werden, so dass das Produkt mit dem nachfolgenden Produkt eine Gruppe oder einen Stapel bildet. Die Teilproduktströme können unterschiedliche Produkte aufweisen. Im Hauptproduktstrom können unterschiedliche Produkte der Teilproduktströme in Stapeln oder Gruppen zusammengeführt werden.

Weiter wird vorgeschlagen, dass der Hauptproduktstrom einen Teilproduktstrom einer weiteren Produktstromüberführungsvorrichtung bildet. Mehrere Produktstromüberführungsvorrichtungen können eine Kaskade bilden. Produktströme können mehrstufig zusammengeführt oder aufgeteilt werden.

Weiter wird eine Zufuhrvorrichtung für eine Verpackungsmaschine mit einer Produktstromüberführungsvorrichtung vorgeschlagen. Die Zufuhrvorrichtung kann mehrere Teilproduktströme vorgelagerter Prozesse in einem Hauptproduktstrom der Verpackungsmaschine zuführen. Eine Verpackungsmaschine kann die Zufuhrvorrichtung aufweisen. Die Zufuhrvorrichtung und/oder die Verpackungsmaschine können die genannten Vorteile aufweisen.

Die erfindungsgemäße Produktstromüberführungsvorrichtung soll hierbei nicht auf die oben beschriebene Anwendung und Ausführungsform beschränkt sein. Insbesondere kann die erfindungsgemäße Produktstromüberführungsvorrichtung zu einer Erfüllung einer hierin beschriebenen Funktionsweise eine von einer hierin genannten Anzahl einzelner Elemente, Bauteile und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Zufuhrvorrichtung mit einer Produktstromüberführungsvorrichtung in einem ersten Ausführungsbeispiel,
- Fig. 2: eine Draufsicht auf die Zufuhrvorrichtung aus Figur 1,
- Fig. 3: einen weiteren Ausschnitt der Produktstromüberführungsvorrichtung mit einem Transportelement in einem Umlenkbereich,
- Fig. 4: einen Ausschnitt der Produktstromüberführungsvorrichtung mit einem Transportelement,
- Fig. 5: eine schematische Darstellung einer Produktstromüberführungsvorrichtung in einem zweiten Ausführungsbeispiel,
- Fig. 6: eine schematische Darstellung einer Neugruppierung von Produkten mit einer Produktstromüberführungsvorrichtung in einem dritten Ausführungsbeispiel,
- Fig. 7: eine schematische Darstellung einer Neugruppierung von Produkten mit einer Produktstromüberführungsvorrichtung in einem vierten Ausführungsbeispiel,
- Fig. 8: eine schematische Darstellung einer Produktstromüberführungsvorrichtung in einem fünften Ausführungsbeispiel und
- Fig. 9: eine Übersicht möglicher Produktstromüberführungsvorrichtungen mit Teil- und Hauptproduktströmen.

### Beschreibung der Ausführungsbeispiele

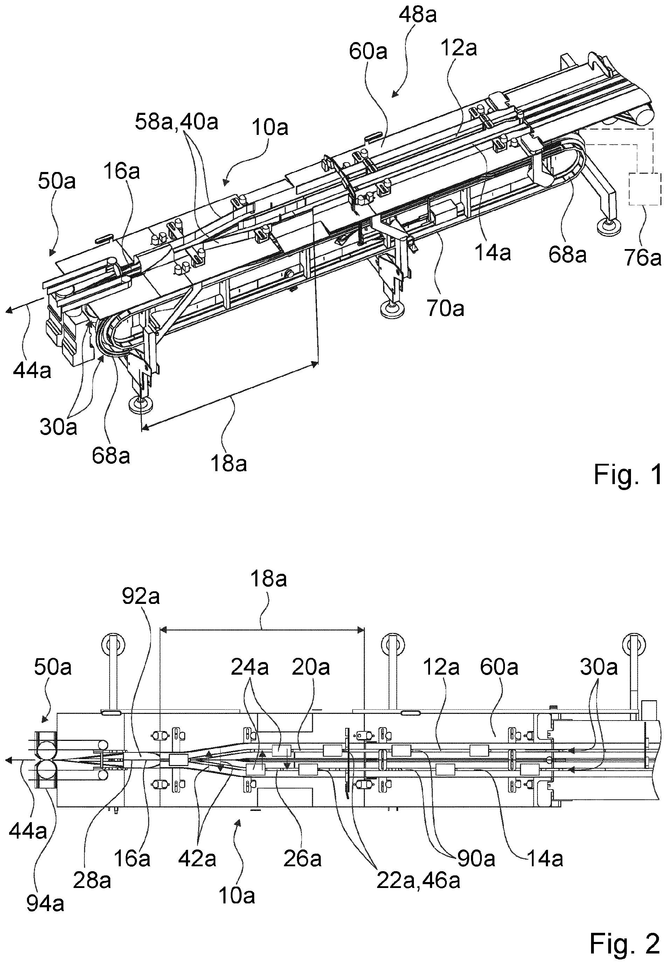

Figur 1 und Figur 2 zeigen eine Zufuhrvorrichtung 48a für eine hier nur angedeutete, als eine Schlauchpackmaschine ausgebildete Verpackungsmaschine 50a mit einer Produktstromüberführungsvorrichtung 10a. Die Produktstromüberführungsvorrichtung 10a ist zum Überführen eines ersten Teilproduktstroms 12a und eines weiteren Teilproduktstroms 14a in einen Hauptproduktstrom 16a entlang einer Produktstromüberführungsstrecke 18a vorgesehen. Entlang einer Seitenstrecke 20a des ersten Teilproduktstroms 12a und einer weiteren Seitenstrecke 26a des weiteren Teilproduktstroms 14a ist eine Vielzahl von Transportelementen 22a (Figuren 2 - 4) zum Transport von Produkten 24a angeordnet. An die Produktstromüberführungsstrecke 18a mit der ersten Seitenstrecke 20a und der weiteren Seitenstrecke 26a grenzt eine Hauptstrecke 28a zum Transport der in dem Hauptproduktstrom 16a zusammengeführten Produkte 24a an. Entlang der Produktstromüberführungsstrecke 18a nähern sich Bahnen der Teilproduktströme 12a, 14a, entlang deren die Produkte 24a entlang der Seitenstrecken 20a, 26a transportiert werden, der Bahn des Hauptproduktstroms 16a, entlang deren Produkte entlang der Hauptstrecke 28a transportiert werden, an.

Die Produktstromüberführungsvorrichtung 10a weist zwei Linearmotorsysteme 30a auf, die entlang der Seitenstrecken 20a, 26a der Produktstromüberführungsstrecke 18a jeweils einen Stator 32a und eine Vielzahl unabhängig antreibbarer Translatoren 34a aufweisen, die dazu vorgesehen sind, die Transportelemente 22a unabhängig voneinander anzutreiben. Die Translatoren 34a sind an den Transportelementen 22a angeordnet und mit diesen fest verbunden. Die Translatoren 34a umgreifen den jeweiligen Stator 32a der Seitenstrecken 20a, 26a u-förmig mit einem Permanentmagnete 52a aufweisenden Sekundärteil des jeweiligen Linearmotorsystems 30a. Die Statoren 32a weisen individuell ansteuerbare Motorwicklungen mit Polen 54a zur Erzeugung eines elektromagnetischen Wanderfelds auf. Weiter weisen die Translatoren 34a Positionsmittel 56a auf, welche über weitere, hier nicht näher dargestellte Positionsmessspulen der Statoren 32a erkannt werden. Eine gemeinsame Steuereinheit 76a zur Steuerung der beiden Linearmotorsysteme 30a kann somit Ort und Geschwindigkeit der Translatoren 34a ermitteln und die Motorwicklungen der jeweiligen Statoren 32a so ansteuern, dass die Transportelemente 22a voneinander unabhängig mit einem gewünschten Geschwindigkeitsprofil angetrieben werden.

Die Produktstromüberführungsvorrichtung 10a weist als Seitenführungen 58a ausgebildete Produktstromsteuermittel 40a auf, die dazu vorgesehen sind, Produkte 24a der Teilproduktströme 12a, 14a in Überführungsbewegungen 42a quer zu einer Transportrichtung 44a des Hauptproduktstroms 16a entlang der Produktstromüberführungsstrecke 18a in den Hauptproduktstrom 16a einzufügen. Die Produkte 24a liegen auf einem aus einem ebenen Blech gebildeten Zufuhrträger 60a auf. Ein Abstand der Seitenführungen 58a verringert sich in der Transportrichtung 44a, in der die Transportelemente 22a die Produkte 24a entlang der Produktstromüberführungsstrecke 18a schieben. Die Produkte 24a werden somit seitlich so weit zusammengeschoben, bis sie den Hauptproduktstrom 16a bilden. Die Transportelemente 22a werden dabei so angesteuert, dass die Produkte 24a der Teilproduktströme 12a, 14a jeweils in Lücken der Produkte 24a des jeweils anderen Teilproduktstroms 12a, 14a geschoben werden.

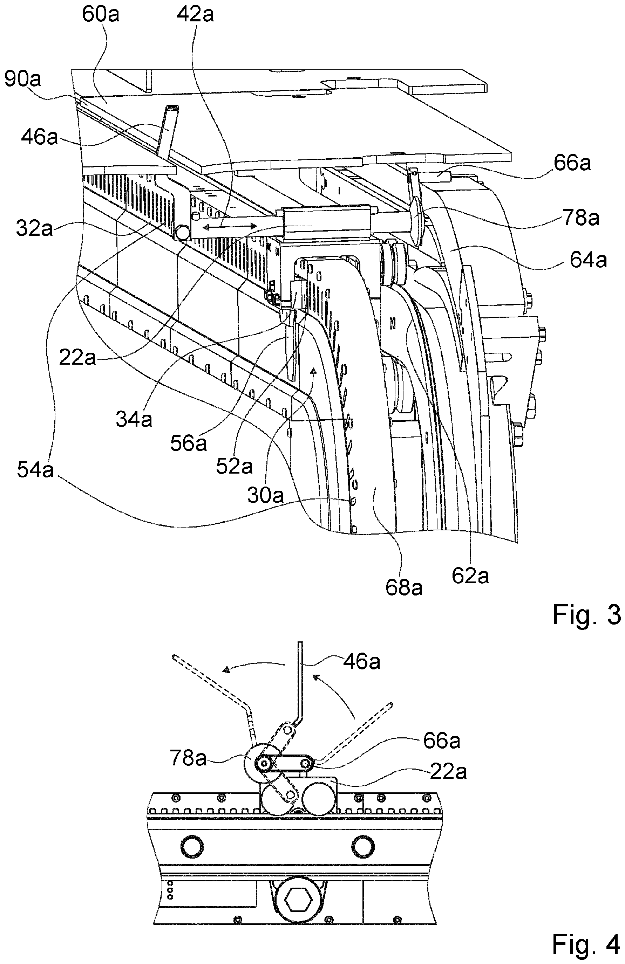

Die Transportelemente 22a der Seitenstrecken 20a, 26a weisen in die Teilproduktströme 12a, 14a der Seitenstrecken 20a, 26a ein- und ausbringbar gelagerte Mitnehmer 46a zum Transport der Produkte 24a auf. Die Mitnehmer 46a sind an den Transportelementen 22a schwenkbar gelagert und werden durch Ausnehmungen 90a des Zufuhrträgers 60a in die Teilproduktströme 12a, 14a ein- und ausgeschwenkt. Figur 4 zeigt einen der Mitnehmer 46a in drei Schwenkpositionen. Zur Steuerung der Mitnehmer 46a ist an feststehenden Führungsvorrichtungen 62a der Transportelemente 22a eine Steuerkulisse 64a angebracht, in die jeweils ein Steuernocken 66a und eine Führungsscheibe 78a der Transportelemente 22a eingreifen. Der Steuernocken 66a steuert die Schwenkpositionen der Mitnehmer 46a. Die Steuerkulisse 64a ist so gestaltet, dass die Mitnehmer 46a zu Beginn der Produktstromüberführungsstrecke 18a in die Teilproduktströme 12a, 14a eintauchen und am Ende der Produktstromüberführungsstrecke 18a wieder aus den nun zum Hauptproduktstrom 16a zusammengeführten Teilproduktströmen 12a, 14a abtauchen. Die Produkte 24a werden entlang der Teilproduktströme 12a, 14a vor der Produktstromüberführungsstrecke 18a durch hier nicht näher dargestellte Mitnehmer von weiteren Transporteinrichtungen transportiert und nach der Produktstromüberführungsstrecke 18a an sich entlang des Hauptproduktstroms 16a bewegende Mitnehmer einer nachfolgenden Verpackungsmaschine 50a abgegeben. Die Mitnehmer 46a synchronisieren die Produkte 24a zu Beginn und am Ende der Produktstromüberführungsstrecke 18a mit den Mitnehmern der jeweils vorausgehenden Transporteinrichtungen beziehungsweise der nachfolgenden Verpackungsmaschine 50a, so dass ein kontinuierlicher Transportvorgang erfolgen kann. Die Mitnehmer der weiteren Transporteinrichtungen und der Verpackungsmaschine 50a können dabei jeweils gemeinsam von umlaufenden Transportmitteln angetrieben werden, wie beispielsweise Ketten. Im gezeigten Beispiel übergeben die Mitnehmer 46a die Produkte 24a direkt an einen von der Verpackungsmaschine 50a um die Produkte 24a geformten, hier nicht näher dargestellten Folienschlauch. Der Folienschlauch wird von der Verpackungsmaschine 50a auf bekannte Art aus einer Materialbahn gebildet, die um eine Formschulter 92a zu dem Schlauch geformt wird. Durch eine in Transportrichtung 44a nachfolgende Längssiegeleinheit 94a wird der Schlauch in Längsrichtung an einer Längsnaht in Richtung einer Gewichtskraft unterhalb der Produkte 24a versiegelt. Die Mitnehmer 46a werden kurz vor der Längssiegeleinheit 94a aus dem Hauptproduktstrom 16a zurückgezogen.

Die Mitnehmer 46a der Transportelemente 22a der Seitenstrecken 20a, 26a sind weiter in Richtung der Überführungsbewegung 42a beweglich gelagert. Die Führungsscheiben 78a der Transportelemente 22a werden von der Steuerkulisse 64a so bewegt, dass sich die Mitnehmer 46a in Richtung der Überführungsbewegung 42a so bewegen, dass sie sich jeweils in der Mitte der Teilproduktströme 12a, 14a befinden und so die Produkte 24a besonders gut transportieren können. Die Transportelemente 22a mit den Translatoren 34a selbst können durch diese Ausgleichsbewegung der Mitnehmer 46a somit entlang der Produktstromüberführungsstrecke 18a entlang einer geraden Bahn geführt werden. Alternativ kann auch die jeweilige Ausnehmung des Zufuhrträgers 60a so gestaltet sein, dass sie als Steuerkulisse auf die Mitnehmer 46a wirkt und diese in Richtung der Überführungsbewegung 42a bewegt.

Die Transportelemente 22a werden von den Führungsvorrichtungen 62a in einem Umlauf geführt. Vor und nach der Produktstromüberführungsstrecke 18a befinden sich Umlenkbereiche 68a, um die die Transportelemente 22a in einem Umlauf um 180° auf eine Rücktransportstrecke 70a und von dieser über den weiteren Umlenkbereich 68a wieder auf die Produktstromüberführungsstrecke 18a umgelenkt werden. Im gezeigten Ausführungsbeispiel weisen die Umlenkbereiche 68a und die Rücktransportstrecke 70a ebenfalls Pole 54a der Linearmotorsysteme 30a auf. Sollen die Transportelemente 22a in den Umlenkbereichen 68a und auf der Rücktransportstrecke 70a nicht unabhängig angetrieben werden, können die Motorwicklungen in diesen Bereichen vereinfacht angesteuert werden, so dass sich entlang dieser Strecken ein Wanderfeld erstreckt, welches die Transportelemente 22a in einer gemeinsamen Geschwindigkeit transportiert. Alternativ kann auch ein umlaufendes Transportmittel, wie ein Riemen oder eine Kette, dazu vorgesehen sein, die Transportelemente 22a gemeinsam um die Umlenkbereiche 68a und entlang der Rücktransportstrecke 70a zu ziehen.

Der Hauptproduktstrom 16a der Produktstromüberführungsvorrichtung 10a kann einen Teilproduktstrom einer weiteren, hier nicht näher dargestellten Produktstromüberführungsvorrichtung bilden. Auf diese Weise können mehrere Teilproduktströme kaskadenförmig in einen Hauptproduktstrom überführt werden.

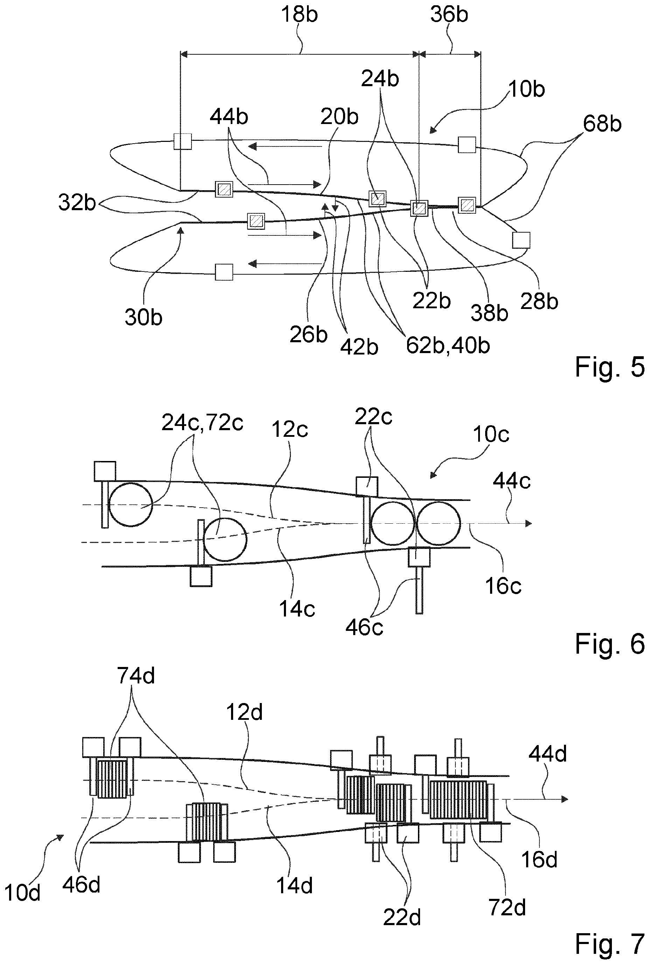

In den Figuren 5 bis 9 sind weitere Ausführungsbeispiele der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibungen der anderen Ausführungsbeispiele, insbesondere der Figuren 1-4, verwiesen werden kann. Zur Unterscheidung der Ausführungsbeispiele ist der Buchstabe a den Bezugszeichen des Ausführungsbeispiels in den Figuren 1-4 nachgestellt. In den Ausführungsbeispielen der Figuren 5-9 ist der Buchstabe a durch die Buchstaben b bis f ersetzt.

Figur 5 zeigt eine Produktstromüberführungsvorrichtung 10b in einem zweiten Ausführungsbeispiel. Die Produktstromüberführungsvorrichtung 10b des zweiten Ausführungsbeispiels unterscheidet sich von der Produktstromüberführungsvorrichtung 10a des ersten Ausführungsbeispiels insbesondere dadurch, dass Transportelemente 22b zweier Seitenstrecken 20b, 26b im Anschluss an eine Produktstromüberführungsstrecke 18b gemeinsam mit von den Transportelementen 22b transportierten Produkten 24b auf eine Hauptstrecke 28b überführt werden. Ein Linearmotorsystem 30b weist entlang der Seitenstrecken 20b, 26b jeweils getrennte Statoren 32b auf sowie im Bereich einer an die Produktstromüberführungsstrecke 18b angrenzenden Teilstrecke 36b der Hauptstrecke 28b einen gemeinsamen Stator 38b, der zum Antrieb der von den Seitenstrecken 20b, 26b auf die Hauptstrecke 28b überführten Transportelemente 22b entlang der Teilstrecke 36b vorgesehen ist. Führungsvorrichtungen 62b der Transportelemente 22b bilden somit gleichzeitig Produktstromsteuermittel 40b, die auf den Seitenstrecken 20b, 26b transportierte Teilproduktströme 12b, 14b gemeinsam mit den Transportelementen 22b zu einem entlang der Hauptstrecke 28b transportierten Hauptproduktstrom 16b in Überführungsbewegungen 42b quer zu einer Transportrichtung 44b zusammenführen. Nach der Teilstrecke 36b werden die Transportelemente 22b auf Umlenkbereiche 68b der Seitenstrecken 20b, 26b aufgeteilt und in einem Umlauf wieder an den Beginn der Produktstromüberführungsstrecke 18b der Seitenstrecken 20b, 26b für einen nächsten Transportumlauf zurückgeführt.

Figur 6 zeigt am vereinfachten Beispiel einer weiteren Produktstromüberführungsvorrichtung 10c eine Neugruppierung oder Stapelung von Produkten 24c während des Zusammenführens der Produkte 24c in einem Hauptproduktstrom 16c ausgehend von zwei Teilproduktströmen 12c, 14c. Figur 6 zeigt das Zusammenführen von jeweils zwei entlang der Teilproduktströme 12c, 14c transportierten Produkten 24c zu einer Produktgruppe, welche von den zwei in einer Transportrichtung 44c hintereinander angeordneten Produkten 24c gebildet wird. Durch Ausschwenken eines Mitnehmers 46c jeweils eines Transportelements 22c werden im Hauptproduktstrom 16c aus den zwei in Transportrichtung 44c hintereinander liegenden Produkten 24c die Produktgruppen gebildet. Diese Produktgruppen können in einem nachfolgenden Verpackungsprozess gemeinsam verpackt werden. Anstelle einzelner Produkte 24c können auf dieselbe Weise auch Stapelgruppen aus Stapeln 72c gebildet werden, wobei die Stapel 72c von mehreren aufeinanderliegenden Produkten 24c gebildet werden.

Figur 7 zeigt am vereinfachten Beispiel einer weiteren Produktstromüberführungsvorrichtung 10d, wie analog zur Figur 6 aus in Teilproduktströmen 12d, 14d angelieferten Teilstapeln 74d in einem Hauptproduktstrom 16d jeweils zwei Teilstapel 74d der Teilproduktströme 12d, 14d umfassende Stapel 72d gebildet werden. Die Teilstapel 74d sind in einer Transportrichtung 44d gestapelt. Um ein Kippen der Stapel 72d und Teilstapel 74d zu verhindern, werden die Stapel 72d und Teilstapel 74d jeweils von zwei Mitnehmern 46d abgestützt, wobei jeweils ein Mitnehmer 46d an gegenüberliegenden Stapelenden der Stapel 72d oder Teilstapel 74d anliegt. Im gezeigten Beispiel weisen Transportelemente 22d jeweils einen Mitnehmer 46d auf, so dass zum Transport jedes Stapels 72d oder Teilstapels 74d zwei Transportelemente 22d erforderlich sind. Eine Stapellänge der zu transportierenden Stapel 72d oder Teilstapel 74d kann einfach variiert werden, indem ein Abstand der einen Stapel 72d oder Teilstapel 74d transportierenden Transportelemente 22d relativ zueinander geeignet gesteuert wird. Alternativ können die Transportelemente 22d jeweils zwei Mitnehmer 46d in geeignetem Abstand aufweisen.

Die Teilproduktströme 12c, 14c sowie 12d, 14d der beiden Beispiele gemäß Figur 6 und Figur 7 können Produkte 24c, 24d sowie Stapel 72c, 72d oder Teilstapel 74d aufweisen, die von unterschiedlichen Produkttypen gebildet werden. Auf diese Weise können zum Beispiel für die Herstellung vom Mischpackungen Gruppen gebildet werden, die verschiedene Produkttypen umfassen.

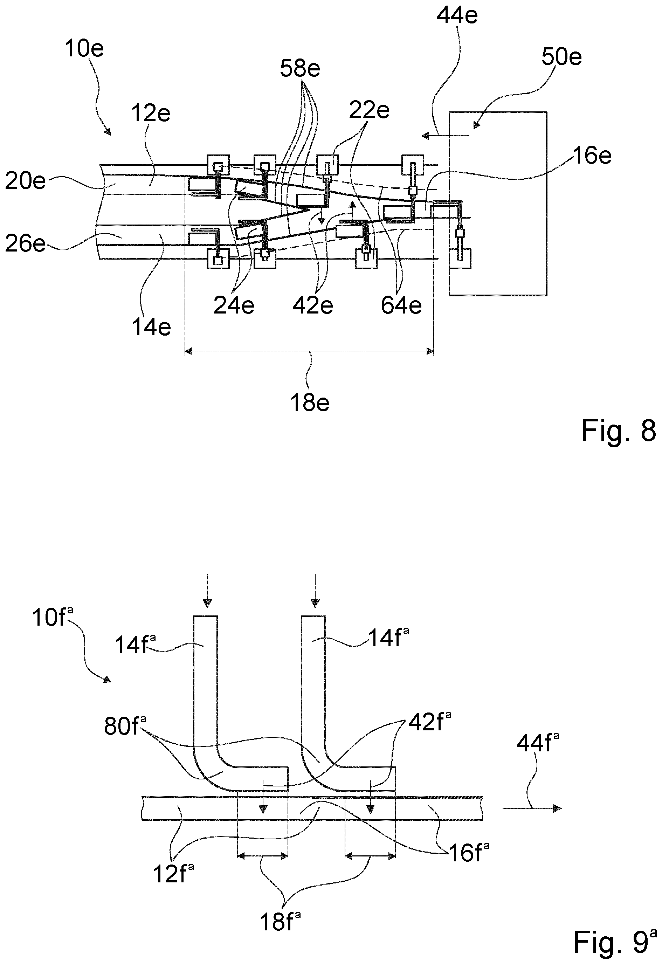

Figur 8 zeigt eine Produktstromüberführungsvorrichtung 10e in einem fünften Ausführungsbeispiel. Die Produktstromüberführungsvorrichtung 10e des fünften Ausführungsbeispiels unterscheidet sich von der Produktstromüberführungsvorrichtung 10a des ersten Ausführungsbeispiels insbesondere dadurch, dass die Produktstromüberführungsvorrichtung 10e zum Trennen eines von einer Verpackungsmaschine 50e angelieferten Hauptproduktstroms 16e in einen ersten Teilproduktstrom 12e und einen weiteren Teilproduktstrom 14e entlang einer Produktstromüberführungsstrecke 18e vorgesehen ist. Transportelemente 22e schieben Produkte 24e ausgehend von einer Hauptstrecke 28e entlang der Produktstromüberführungsstrecke 18e. Die Transportelemente 22e sind jeweils einer von zwei Seitenstrecken 20e, 26e der beiden Teilproduktströme 12e, 14e zugeordnet. Die Transportelemente 22e weisen als von einer Steuerkulisse 64e in einer Überführungsbewegung 42e bewegte Mitnehmer 46e ausgebildete Produktstromsteuermittel 40e auf. Die Mitnehmer 46e schieben die Produkte 24e gleichzeitig in einer Transportrichtung 44e entlang der Produktstromüberführungsstrecke 18e und in der Überführungsbewegung 42e in Richtung der Seitenstrecken 20e, 26e der Teilproduktströme 12e, 14e der jeweiligen Transportelemente 22e. Dies wird von Seitenführungen 58e, die die Produkte 24e zentrieren, unterstützt.

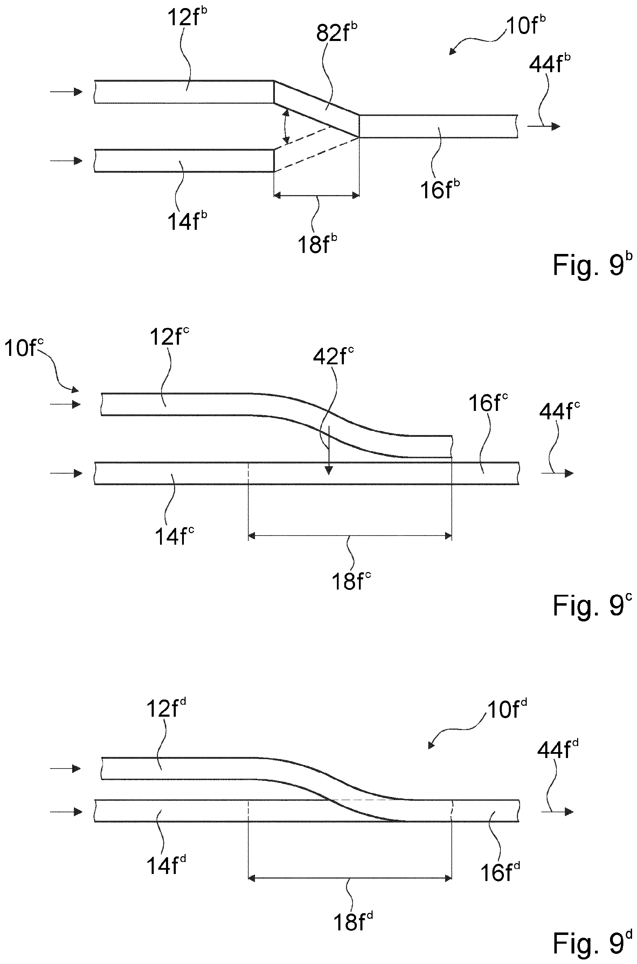

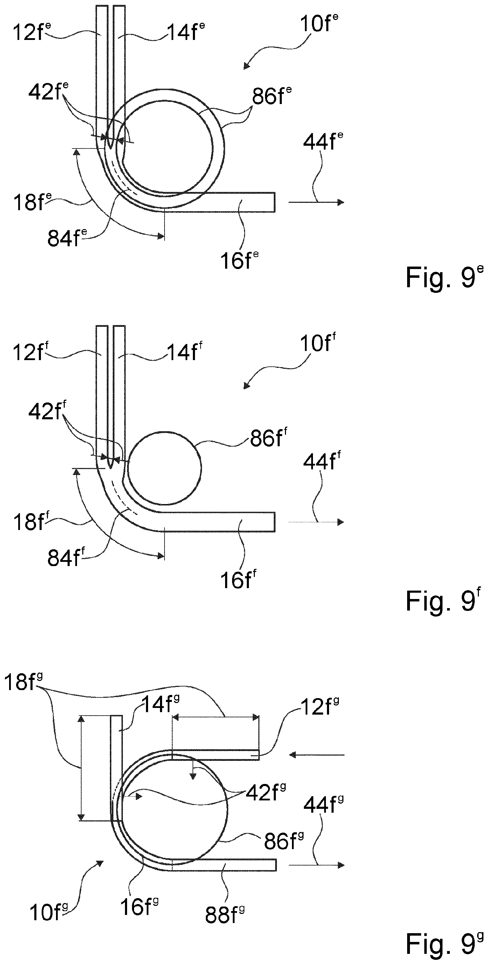

Figur 9 zeigt eine Übersicht von möglichen Ausgestaltungen von Teil- und Hauptproduktströmen 12f, 14f, 16f von Varianten von erfindungsgemäßen Produktstromüberführungsvorrichtungen 10f.

Eine in Figur 9^{a} dargestellte Produktstromüberführungsvorrichtung 10f^{a} weist einen ersten Teilproduktstrom 12f^{a} und zwei weitere Teilproduktströme 14f^{a} auf. Die Teilproduktströme 14f^{a} sind zunächst in einem steilen Winkel von im Beispiel 90° zu einer gemeinsamen Transportrichtung 44f^{a} des ersten Teilproduktstroms 12f^{a} sowie eines Hauptproduktstroms 16f^{a} geführt. Kreisbögen 80fa lenken die Teilproduktströme 14f^{a} in die Transportrichtung 44f^{a} In auf die Kreisbögen 80fa folgenden Produktstromüberführungsstrecken 18f^{a} werden hier nicht dargestellte Produkte der Teilproduktströme 14f^{a} in einer Überführungsbewegung 42f^{a} quer zur Transportrichtung 44f^{a} in den Hauptproduktstrom 16f^{a} überführt. Dabei bildet der Hauptproduktstrom 16fa nach der in Transportrichtung 44f^{a} ersten Produktstromüberführungsstrecke 18fa wiederum einen Teilproduktstrom 12f^{a} der in Transportrichtung 44f^{a} zweiten Produktstromüberführungsstrecke 18f^{a}_{.} Die Teilproduktströme 14f^{a} sind in diesem Beispiel als Kaskaden des Hauptproduktstroms 16f^{a} angeordnet. Es ist auch möglich, dass auf diese Art mehr als die im Beispiel gezeigten zwei Teilproduktströme 14f mit dem Hauptproduktstrom 16f^{a} zusammengeführt werden. Der Hauptproduktstrom 16f^{a} bildet in diesem Fall jeweils wiederum einen Teilproduktstrom 12f^{a} weiterer, in Transportrichtung 44f^{a} folgender Produktstromüberführungsstrecken 18f^{a}.

Eine weitere Produktstromüberführungsvorrichtung 10f^{b} in Figur 9^{b} weist eine Produktstromüberführungsstrecke 18f^{b} mit einer Weiche 82f^{b} auf, die zwischen zwei Teilproduktströmen 12f^{b} und 14f^{b} hin- und hergeschwenkt wird, Produkte der Teilproduktströme 12f^{b} und 14f^{b} übernimmt und die Produkte in einen Hauptproduktstrom 16f^{b} überführt. Hier nicht dargestellte Transportelemente können ebenfalls von der Weiche 82f^{b} übernommen und im Hauptproduktstrom 16f^{b} zusammengeführt werden oder in einem separaten Umlauf geführt werden und die Produkte über Mitnehmer transportieren.

Figur 9^{c} zeigt eine Produktstromüberführungsvorrichtung 10f^{c} mit zwei Teilproduktströmen 12f^{c} und 14f^{c}, wobei der erste Teilproduktstrom 12f^{c} sich entlang einer Produktstromüberführungsstrecke18f^{c} in einem Bogen einem Hauptproduktstrom 16f^{c} in einer Überführungsbewegung 42f^{c} annähert, während der weitere Teilproduktstrom 14f^{c} gerade in den Hauptproduktstrom 16f^{c} übergeht. Eine Bahn des Teilproduktstroms 14f^{c} entspricht damit der Bahn des Hauptproduktstroms 16f, so dass eine Annäherung der Bahn des Teilproduktstroms 14f an den Hauptproduktstrom 16f^{c} entfällt und der Teilproduktstrom 14f^{c} mit der Überführung des Teilproduktstroms 12f^{c} zum Hauptproduktstrom 16f^{c} wird. Es ist möglich, dass auf diese Art mehrere Teilproduktströme kaskadenartig dem Hauptproduktstrom 16f^{c} zugeführt werden.

Figur 9^{d} zeigt eine Produktstromüberführungsvorrichtung 10f^{d} mit zwei Teilproduktströmen 12f^{d} und 14f^{d}, wobei der erste Teilproduktstrom 12f^{d} in Richtung einer hier nicht dargestellten Gewichtskraft oberhalb eines Hauptproduktstroms 16f^{d} angeordnet ist. Der weitere Teilproduktstrom 14f^{d} geht wie im vorangegangenen Beispiel gerade in den Hauptproduktstrom 16f^{d} über. Der erste Teilproduktstrom 12f^{d} senkt sich von oben in einer Produktstromüberführungsstrecke 18f^{d} auf den weiteren Teilproduktstrom 14f^{d} ab, Produkte des ersten Teilproduktstroms 12f^{d} werden dabei auf Produkten des weiteren Teilproduktstroms 14f^{d} abgelegt, so dass Stapel aus jeweils einem Produkt des ersten und einem Produkt des zweiten Teilproduktstroms 12f^{d}, 14f^{d} gebildet werden.

Figur 9^{e} zeigt eine Produktstromüberführungsvorrichtung 10f^{e} mit zwei Teilproduktströmen 12fe und 14fe, wobei eine Produktstromüberführungsstrecke 18fe in einem Kreisbogen 84fe angeordnet ist. Alternativ zum Kreisbogen 84f^{e} sind auch andere umlaufende Transportbahnen denkbar, wie zum Beispiel ovale, dreieckförmige oder rechteckige Bahnen. Transportelemente sind umlaufend auf zwei Kreisbahnen 86f^{e} geführt und überführen Produkte der Teilproduktströme 12f^{e} und 14f^{e} in radialen Überführungsbewegungen 42f^{e} auf einen Hauptproduktstrom 16f^{e}.

Figur 9^{f} zeigt eine Produktstromüberführungsvorrichtung 10f^{f}, die sich von der vorhergehenden dadurch unterscheidet, dass Transportelemente von zwei Teilproduktströmen 12f^{f} und 14f^{f} auf einer gemeinsamen Kreisbahn 86f^{f} geführt sind. Alternativ sind auch hier abweichende Formen umlaufender Transportbahnen denkbar. Eine Produktstromüberführungsstrecke 18f^{f}, in der Produkte der Teilproduktströme 12f^{f} und 14f^{f} in radialen Überführungsbewegungen 42f^{f} auf einen Hauptproduktstrom 16f^{f} überführt werden, ist ebenfalls in einem Kreisbogen 84f^{f} angeordnet.

Figur 9^{g} zeigt eine Produktstromüberführungsvorrichtung 10f^{g}, die sich von der vorhergehenden dadurch unterscheidet, dass Teilproduktströme 12f^{g} und 14f^{g} entlang von Produktstromüberführungsstrecken 18f^{g} tangential an unterschiedlichen Stellen eines Umfangs eines abschnittsweise kreisförmigen Hauptproduktstrom 16f^{g} in den Hauptproduktstrom 16f^{g} überführt werden. Transportelemente zum Transport von Produkten entlang der Produktstromüberführungsstrecken 18f^{g} und des kreisförmigen Abschnitts des Hauptproduktstroms 16f^{g} sind umlaufend auf einer Kreisbahn 86f^{g} geführt. Der Hauptproduktstrom 16f^{g} geht an einer Auslaufstrecke 88f^{g} in einen geraden Streckenabschnitt über, der Produkte des Hauptproduktstroms 16f^{g} zu einer Verpackungsmaschine führt. Es sind auch hier von der Kreisbahn abweichende umlaufende Bahnen möglich.

## Patentansprüche

1. Produktstromüberführungsvorrichtung zum Überführen zumindest eines ersten Teilproduktstroms (12a-d;f) und eines weiteren Teilproduktstroms (14a-d,f) in einen Hauptproduktstrom (16a-d,f) oder zum Trennen eines Hauptproduktstroms (16e) in zumindest einen ersten Teilproduktstrom (12e) und einen weiteren Teilproduktstrom (14e) entlang einer Produktstromüberführungsstrecke (18a-b,e-f), mit einer ersten Seitenstrecke (20a-c,e) mit einer Vielzahl von Transportelementen (22a-e) zum Transport von Produkten (24a-e) des ersten Teilproduktstroms (12a-f), mit zumindest einer weiteren Seitenstrecke (26a-c,e) mit einer Vielzahl von Transportelementen (22a-e) zum Transport von Produkten (24a-e) des weiteren Teilproduktstroms (14a-f), mit einer an die Produktstromüberführungsstrecke (18a-b,e-f) angrenzenden Hauptstrecke (28a-f) zum Transport der Produkte (24a-f) des Hauptproduktstroms (16a-f) und mit zumindest einem Produktstromsteuermittel (40a;b;e), das dazu vorgesehen ist, Produkte (24a;b) zumindest eines der Teilproduktströme (12a;b, 14a;b) in Überführungsbewegungen (42a;b) quer zu einer Transportrichtung (44a;b) des Hauptproduktstroms (16a;b) entlang der Produktstromüberführungsstrecke (18a;b) in den Hauptproduktstrom (16a;b) einzufügen oder zumindest eine Teilmenge der Produkte (24e) des Hauptproduktstroms (16e) in Überführungsbewegungen (42e) quer zur Transportrichtung (44e) des Hauptproduktstroms (16e) entlang der Produktstromüberführungsstrecke (18e) auf die Teilproduktströme (14e) zu verteilen, **dadurch gekennzeichnet, dass** die Transportelemente (22a;c;e) zumindest einer Seitenstrecke (20a;c;e, 26a;c;e) in Richtung der Überführungsbewegung (42a;e) quer zur Transportrichtung (44a) des Hauptproduktstroms (16e), entlang der Produktstromüberführungsstrecke (18a-c,e), bewegbar gelagerte Mitnehmer (46a;c;e) zum Transport der Produkte (24a;c;e) aufweisen, wobei zumindest Teilmengen der Transportelemente (22a-e) zumindest entlang einer der Seitenstrecken (20a-c,e, 26a-c,e) der Produktstromüberführungsstrecke (18a-c,e) voneinander unabhängig antreibbar sind.

2. Produktstromüberführungsvorrichtung nach Anspruch 1, **gekennzeichnet durch** zumindest ein Linearmotorsystem (30a-b), das zumindest entlang einer Seitenstrecke (20a-c,e, 26a-c,e) der Produktstromüberführungsstrecke (18a-c,e) einen Stator (32a-b) und eine Vielzahl unabhängig antreibbarer Translatoren (34a) aufweist, die dazu vorgesehen sind, die Transportelemente (22a-e) unabhängig voneinander anzutreiben.

3. Produktstromüberführungsvorrichtung nach Anspruch 2, **dadurch gekennzeichnet, dass** an der Hauptstrecke (28b) zumindest entlang einer an die Produktstromüberführungsstrecke (18b) angrenzenden Teilstrecke (36b) ein weiterer Stator (38b) des Linearmotorsystems (30b) angeordnet ist, der zum Antrieb der von den Seitenstrecken (20b, 26b) auf die Hauptstrecke (28b) überführten oder der von der Hauptstrecke (28b) auf die Seitenstrecken (20b, 26b) zu verteilenden Transportelemente (22b) entlang der Teilstrecke (36b) vorgesehen ist.

4. Produktstromüberführungsvorrichtung nach einem der vorhergehenden Ansprüche, **dadurch gekennzeichnet, dass** der Hauptproduktstrom (16f) einen Teilproduktstrom einer weiteren Produktstromüberführungsvorrichtung bildet.

5. Zufuhrvorrichtung (48a) für eine Verpackungsmaschine (50a;e) mit einer Produktstromüberführungsvorrichtung (10a-f) nach einem der vorhergehenden Ansprüche.

## Claims

1. Product stream transfer device for a transfer of at least one product sub-stream (12a-d; f) and of at least one further product sub-stream (14a-d, f) into a main product stream (16a-d, f), or for a separation of a main product stream (16e) into at least one first product sub-stream (12e) and at least one further product sub-stream (14e) along a product stream transfer route (18a-b, e-f),
comprising a first side route (20a-c, e), with a plurality of transport elements (22a-e) for a transport of products (24a-e) of the first product sub-stream (12a-f), comprising at least one further side route (26a-c, e) with a plurality of transport elements (22a-e) for a transport of products (24a-e) of the further product sub-stream (14a-f), comprising a main route (28a-f) that is adjacent to the product stream transfer route (18a-b, e-f) for a transport of the products (24a-f) of the main product stream (16a-f), and comprising at least one product stream controlling means (40a; b; e) that is configured to insert products (24a; b) of at least one of the product sub-streams (12a; b, 14a; b) into the main product stream (16a; 6) in transfer movements (42a; b) transversely to a transport direction (44a; b) of the main product stream (16a; b) along the product stream transfer route (18a; b), or to distribute at least a partial quantity of the products (24e) of the main product stream (16e) onto the product sub-streams (14e) in transfer movements (42e) transversely to the transport direction (44e) of the main product stream (16e) along the product stream transfer route (18e),
**characterised in that** the transport elements (22a; c; e) of at least one side route (20a; c; e, 26a; c; e) comprise drivers (46a; c; e) which are supported along the product stream transfer route (18a-c, e) in such a way that they are movable in a direction of the transfer movement (42a; e) transversely to the transport direction (44a) of the main product stream (16e),
wherein at least partial quantities of the transport elements (22a-e) are drivable independently from one another at least along one of the side routes (20a-c, e, 26a-c, e) of the product stream transfer route (18a-c, e).

2. Product stream transfer device according to claim 1, **characterised by** at least one linear motor system (30a-b) comprising, at least along a side route (20a-c, e, 26a-c, e) of the product stream transfer route (18a-c, e), a stator (32a-b) and a plurality of independently drivable translators (34a), which are configured to drive the transport elements (22a-e) independently from one another.

3. Product stream transfer device according to claim 2, **characterised in that,** on the main route (28b), at least along a sub-route (36b) that is adjacent to the product stream transfer route (18b), there is a further stator (38b) of the linear motor system (38b) arranged, which is configured for driving the transport elements (22b) along the sub-route (36b) which have been transferred from the side routes (20b, 26b) to the main route (28b) or which are to be distributed from the main route (28b) onto the side routes (20b, 26b).

4. Product stream transfer device according to one of the preceding claims, **characterised in that** the main product stream (16f) embodies a product sub-stream of a further product stream transfer device.

5. Feeding device (48a) for a packaging machine (50a; e) with a product stream transfer device (10a-f) according to one of the preceding claims.

## Revendications

1. Dispositif-transfert de flux de produits pour un transfert d'au moins un premier flux de produits partiel (12a-d ; f) et un flux de produits partiel de plus (14a-d ; f) dans un flux de produits principal (16a-d ; f) ou pour une séparation d'un flux de produits principal (16e) dans au moins un premier flux de produits partiel (12e) et un flux de produits partiel de plus (14e) le long d'une ligne-transfert de flux de produits (18a-b, e-f), comprenant une première ligne latérale (20a-c ; e) avec une pluralité d'éléments de transport (22a-e) pour un transport de produits (24a-e) du premier flux de produits partiel (12a-f), comprenant au moins une ligne latérale de plus (26a-c ; e) avec une pluralité d'éléments de transport (22a-e) pour un transport de produits (24a-e) du flux de produits partiel de plus (14a-f), comprenant une ligne principale (28a-f), jouxtant la ligne-transfert de flux de produits (18a-b ; e-f), pour un transport des produits (24a-f) du flux de produits principal (16a-f) et comprenant au moins un moyen de commande de flux de produits (40a ; b ; e) prévu pour insérer des produits (24a ; b) d'au moins un des flux partiels de produits (12a ; b, 14a ; b), en mouvements de transfert (42a ; b) transversalement à une direction de transport (44e) du flux de produits principal (16a ; b), le long de la ligne-transfert de flux de produits (18a ; b), dans le flux de produits principal (16a ; b) ou pour distribuer au moins une quantité partielle des produits (24e) du flux de produits principal (16e), en mouvements de transfert (42e) transversalement à la direction de transport (44a ; b) du flux de produits principal (16e), le long de la ligne-transfert de flux de produits (18e), sur les flux de produits partiels (14e), **caractérisé en ce que** les éléments de transport (22a ; c ; e) d'au moins une ligne latérale (20a ; c ; e, 26a ; c ; e) comportent des entraîneurs (46a ; c ; e) pour le transport des produits (24a ; c ; e), lesdits entraîneurs (46a ; c ; e) étant supportés le long de la ligne-transfert de flux de produits (18a-c ; e) de telle manière qu'ils sont mouvables en direction du mouvement de transfert (42a ; e), transversalement à la direction de transport (44a) du flux de produits principal (16e),
où au moins des quantités partielles des éléments de transport (22a-e) sont entraînables indépendamment l'une de l'autre, au moins le long de l'une des lignes latérales (20a-c ; e, 26a-c ; e) de la ligne-transfert de flux de produits (18a-c ; e).

2. Dispositif-transfert de flux de produits selon la revendication 1,
**caractérisé par** au moins un système de moteur linéaire (30a-b) comprenant, au moins le long de l'une ligne latérale (20a-c ; e, 26a-c ; e) de la ligne-transfert de flux de produits (18a-c ; e), un stator (32a-b) et une pluralité de translateurs (34a) prévus à entraîner les éléments de transport (22a-e) indépendamment l'un de l'autre.

3. Dispositif-transfert de flux de produits selon la revendication 2,
**caractérisé en ce qu'** à la ligne principale (28b), au moins le long d'une ligne partielle (36b) jouxtant la ligne-transfert de flux de produits (18b), un stator de plus (38b) du système de moteur linéaire (30b) est disposé, qui est prévu pour un entraînement le long de la ligne partielle (36b) des éléments de transport (22b) transférés des lignes latérales (20b, 26b) dans la ligne principale (28b) ou des éléments de transport (22b) à distribuer de la ligne principale (28b) sur les lignes latérales (36b).

4. Dispositif-transfert de flux de produits selon l'une quelconque des revendications précédentes,
**caractérisé en ce que** le flux de produits principal (16f) forme un flux de produits partiel d'un dispositif-transfert de flux de produits de plus.

5. Dispositif d'alimentation (48a) pour une machine d'emballage (50a ; e) avec un dispositif-transfert de flux de produits (10a-f) selon l'une quelconque des revendications précédentes.
